# EUROPEAN PATENT APPLICATION

(11) **EP 1 914 468 A1**
(43) Date of publication of application: **23.04.2008**
(21) Application number: 05762028.8
(22) Date of filing: 21.07.2005
(51) Int. Cl.: F16N 7/36, F04B 23/02, F16N 25/02, F16N 27/02

(54) **LUBRICATING OIL FEEDER**

(71) Applicant: Lube Co., Ltd., Tokyo 169-0051 (JP)
(72) Inventor: OZEKI, Noboru, c/o LUBE CO., LTD., Tokyo 169-0051 (JP); ARIYASU, Takayuki, c/o LUBE CO., LTD., Nishiibaraki-gun, Ibaraki 309-1222 (JP)
(74) Representative: Liebetanz, Michael
(86) International application number: PCT/JP2005/013358
(87) International publication number: WO 2007/010605

(57) **Abstract**

A lubricating oil feeder, comprising a pump (10) feeding a lubricating oil reserved in a lubricating oil reserving part (20) and a plurality of changeover valves (30) and (50) connected in series to the pump (10) and changed over to feed the lubricating oil to each of a plurality of lines (P1), (P2), and (P3) of different systems. The changeover valve (30) on the upper side of the lowermost changeover valve (50) is changed over to connect the pump (10) to the line (P1), and the lowermost changeover valve (50) is changed over to connect the pump (10) to the line (P2) and the pump (10) to the line (P3).

## Description

### Technical Field

The present invention relates to a lubricating oil feeder which supplies a lubricating oil to a lubricating system having a plurality of lines through which a lubricating oil such as a grease or an oil is fed.

### Background Art

Heretofore, this type of lubricating oil feeder has been suggested by the present applicant as a conventional example. This lubricating oil feeder is provided in a lubricating system installed in an injection molding machine for a resin or a metal, and supplies a grease as a lubricating oil to this lubricating system (Patent Document 1).

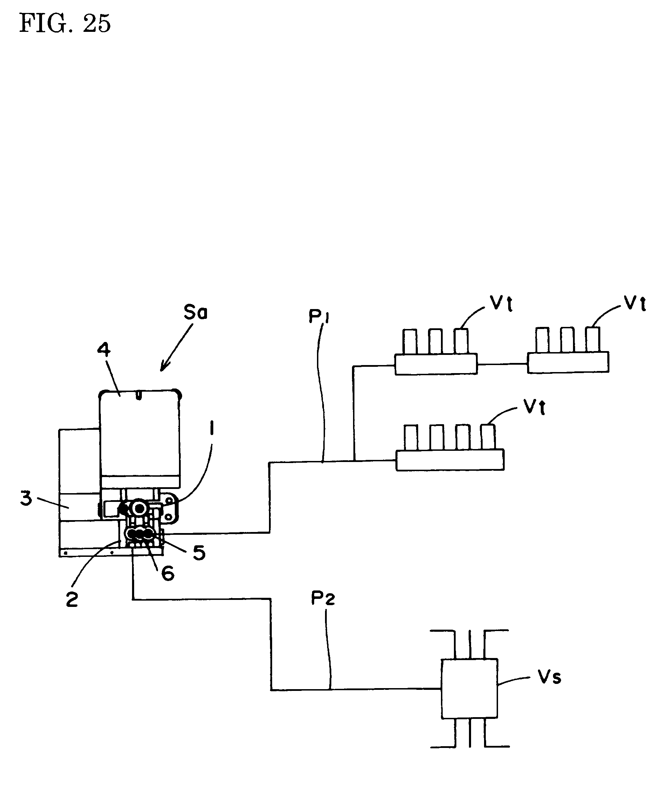

As shown in FIG. 25, the injection molding machine in which the lubricating system having this lubricating oil feeder Sa provided therein is used feeds the oil to a region, e.g., a toggle part where a relatively small oil feed amount suffices and a region, e.g., an open ball screw without sealing where a relatively large oil feed amount is required. At this time, when the region requiring a large oil feed amount is determined as a reference, an oil feed amount in the region where the relatively small oil feed amount suffices is increased, resulting in a waste. Thus, the region, e.g., the toggle part where the relatively small oil feed amount suffices is discriminated from the region, e.g., the open ball screw without sealing where the relatively large oil feed amount is required. Further, single constant-flow valves Vt are used to arrange lines at a plurality of corresponding positions in the region where the relatively small oil feed amount suffices. On the other hand, well-known progressive constant-flow valves Vs are used to arrange lines at a plurality of corresponding positions in the region requiring the relatively large oil feed amount. This progressive constant-flow valve Vs includes a plurality of pistons (not shown) which sequentially reciprocate based on pressurization of a lubricating oil to discharge the lubricating oil and a plurality of pairs of discharge openings associated with these pistons.

The single constant-flow valve Vt operates based on pressurization and depressurization of the lubricating oil to discharge the lubricating oil, and requires depressurization because of its relationship. On the other hand, the progressive constant-flow valve Vs discharges the lubricating oil based on pressurization of the lubricating oil, but does not require depressurization for an operation of the valve in particular.

Therefore, this lubricating system includes lines of two systems, i.e., first and second lines P1 and P2. Further, the single constant-flow valves Vt are consolidated and connected with the first line P1, and the progressive constant-flow valve Vs is consolidated and connected with the second line P2.

Furthermore, the lubricating oil feeder Sa used in this lubricating system includes one pump 1 and one changeover valve 2 as shown in FIG. 25. The pump 1 feeds the lubricating oil reserved in a lubricating oil reserving part 4 to the first line P1 and the second line P2 provided in parallel based on driving of a motor 3. The changeover valve 2 is connected with the pump 1, changed over to feed the lubricating oil from the pump 1 to one of the first line P1 and the second line P2, and depressurizes the first line P1 when not connected with the first line 1. In the drawing, reference numeral 5 denotes a first line connection port for the changeover valve 2 connected with the first line P1, and reference numeral 6 designates a second line connection port for the changeover valve 2 connected with the second line P2.

Based on this structure, first, when using the first line to perform lubrication, the changeover valve 2 is changed over to connect the pump 1 with the first line P1, thereby operating the pump 1. Then, the pump 1 is stopped, and the changeover valve 2 is changed over to connect the pump 1 with the second line P2. As a result, in the first line P1, pressurization and depressurization of the lubricating oil are performed, each single constant-flow valve Vt is operated, and the lubricating oil is discharged.

Moreover, when using the second line P2 to perform lubrication, the changeover valve 2 is changed over to connect the pump 1 with the second line P2, thereby operating the pump 1. As a result, in the second line P2, the progressive constant-flow valve Vs is operated based on pressurization of the lubricating oil, and the lubricating oil is discharged. Then, when the pump 1 is stopped to operate, the progressive constant-flow valve Vs stops discharging the lubricating oil.

In this manner, the oil is fed to the first line P1 and the second line P2.
Patent Document 1: Japanese Patent Application Laid-open No. 2002-323196

### Disclosure of the Invention

### Problems to be Solved by the Invention

Meanwhile, in such a lubricating oil feeder Sa, the lubricating oil to be fed may be wasted depending on lubricating conditions of a machine which is not restricted to the injection molding machine. For example, when there is a region where feeding the oil little by little is desired in an intermittent time longer than or shorter than an intermittent time of the single constant-flow valve Vt of the first line P1, supplying the lubricating oil from the single constant-flow valve Vt provided in the first line P1 enables operating the other single constant-flow valves Vt provided in the first line P1 in synchronization with oil supply by this single constant-flow valve Vt. As a result, the other single constant-flow valves Vt operate more than necessity, and the lubricating oil to be supplied is wasted.

That is, although the conventional lubricating oil feeder Sa can feed the lubricating oil while setting different intermittent times in the lines of the two systems, it cannot individually feed the lubricating oil to lines of three or more systems, and a degree of freedom in how to feed the lubricating oil is poor. Although providing a new pump and connecting a line different from the lines of the two systems to this pump can be considered to solve this problem, a cost is thereby increased.

In view of the above-explained problems, it is an object of the present invention to provide a lubricating oil feeder which enables individually feeding a lubricating oil to each of lines of three or more systems from one pump to increase a degree of freedom in how to feed the lubricating oil, improves versatility, and simplifies a system to reduce a cost.

### Means for Solving Problems

To achieve this object, according to the present invention, there is provided a lubricating oil feeder which includes one pump feeding a lubricating oil reserved in a lubricating oil reserving part and feeds the lubricating oil to a plurality of lines of different systems from the pump, comprising: a plurality of changeover valves which are sequentially continuously provided and connected with the pump and changed over to individually feed the lubricating oil to the respective lines, wherein a changeover valve on the upper side of the lowermost changeover valve in the plurality of changeover valves is formed of a solenoid valve, the solenoid valve having: an input port connected with a discharge opening side of the pump; a drain port opened to the lubricating oil reserving part side; a main port connected with the input port of a lower changeover valve on the side of one of the plurality of lines; a sub-port connected with one of the other lines; and a drain connection port which is connected with the drain port of the lower changeover valve and communicates with its own drain port, the input port being connected with the sub port whilst the drain port, the drain connection port, and the main port being disconnected from the input port and the sub port in an ON period where the solenoid valve is energized, the input port being connected with the main port, the drain port being connected with the sub-port, and the input port being disconnected from the sub-port in an OFF period where the solenoid valve is de-energized, and the lowermost changeover valve is formed of a solenoid valve, the solenoid valve having: an input port connected with the discharge opening side of the pump; a drain port opened to the lubricating oil reserving part side; a main port connected with one of the plurality of lines; and a sub-port connected with one of the other lines, the input port being connected with the sub-port whilst the drain port and the main port being disconnected from the input port and the sub-port in the ON period where the solenoid valve is energized, the input port being connected with the main port, the drain port being connected with the sub-port, and the input port being disconnected from the sub-port in the OFF period where the solenoid valve is de-energized.

As a result, this lubricating oil feeder can operate with a total of at least two changeover valves, i.e., the single changeover valve provided on the upper side of the lowermost changeover valve and the single lowermost changeover valve. When using this lubricating oil feeder to individually feed the lubricating oil to the lines of three or more systems, the following operation is carried out.

When feeding the oil to one of the lines connected of the sub-port of each changeover valve, the solenoid valve of the changeover valve having the sub port connected with the line to which the lubricating oil is to be fed is energized by an operation, the input port is connected with the sub-port, the drain port is connected with the main port, and the input port and the sub-port are disconnected from the drain port and the main port. Further, the changeover valve provided on the upper side of this changeover valve is de-energized, the input port is connected with the main port, the drain port is connected with the sub-port, and the input port and the sub-port are disconnected from each other. Therefore, the lubricating oil from the pump passes through the input port and the main port in the changeover valves on the upper side of the energized changeover valve to be fed to the lower changeover valves. Furthermore, the lubricating oil from the upper main port passes through the input port and the sub-port of the energized changeover valve to be fed to the line connected with this sub-port.

Moreover, when stopping supply of the lubricating oil, the pump is deactivated, and the energized changeover valve is de-energized by the operation. This de-energized changeover valve connects the input port with the main port, and connects the drain port with the sub-port, and disconnects the input port from the sub-port. At this time, the lubricating oil in the line connected with the sub-port of this changeover valve passes through the sub-port and the drain port and further passes through the drain connection port and the drain port of the changeover valve on the upper side of this de-energized changeover valve to reach the lubricating oil reserving part side. Therefore, the line of this de-energized changeover valve is depressurized. As a result, even if the line connected with the sub-port of the changeover valve includes a valve requiring depressurization of the line, e.g., the single constant-flow valve, it is depressurized to be operable, and hence the single constant-flow valve of this line operates once when supplying the lubricating oil to this line next time, and the lubricating oil is discharged to be fed to a region to which the oil is supplied.

Additionally, when supplying the lubricating oil to the line connected with the main port of the lowermost changeover valve, the operation of the pump is stopped, and the solenoid valves of all the changeover valves are de-energized. As a result, each changeover valve on the upper side of the lowermost changeover valve is de-energized, the input port is connected with the main port, the drain port is connected with the sub-port, and the input port and the sub-port are disconnected from each other. Further, since the lowermost changeover valve is also de-energized, the drain port is connected with the sub-port, and the input port is disconnected from the sub-port. Therefore, the lubricating oil from the pump passes through the input port and the main port of each upper changeover valve and further passes through the lowermost input port and main port to be fed to the line connected with this main port.

As a result, the lubricating oil can be fed to the lines of the three different systems by the single pump based on energization and de-energization of the respective changeover valves, and the lubricating oil can be supplied to the respective lines of the three systems having different intermittent times in which both a region where performing the single oil supply per unit time assures a predetermined oil feed amount and a region where a predetermined oil feed amount per unit time is assured by reducing the single oil feed amount and performing supply of the oil in several batches are present.

When adding another line to the lines of the three systems and supplying the lubricating oil to the lines of the four systems, a total of three changeover valves, i.e., two changeover valves on the upper side of the lowermost changeover valve and the single lowermost value are used. In this case, the input port and the drain port of this added changeover valve are connected with the main port and the drain connection port of the upper changeover valve connected with the pump, and the main port and the drain connection port are connected with the input port and the drain port of the lowermost changeover valve, for example. Furthermore, the line of the fourth system is connected with the sub-port of this changeover valve. Moreover, when individually supplying the lubricating oil from the single pump to lines of five or more systems, likewise, the number of the changeover valves on the upper side of the lowermost changeover valve is increased in accordance with the number of the systems of the lines, and these valves are provided together with the lowermost valve to be connected with the pump. Additionally, when supplying the lubricating oil from the pump to these lines, the lines are connected with the sub-ports of the changeover valves, the changeover valve having the sub-port connected with the line through which the lubricating oil is to be supplied is energized, the pump is operated, and the lubricating oil is fed.

As a result, the lubricating oil can be individually supplied to the lines of three or more systems. Therefore, since the intermittent time can be set in accordance with each line, a degree of freedom in how to supply the lubricating oil can be increased, thereby heightening the versatility. Therefore, a waste of the lubricating oil to be fed can be reduced as compared with the conventional lubricating system. Further, a new pump does not have to be provided for the added line, and the system can be simplified to reduce a cost.

Furthermore, in this lubricating oil feeder, the lubricating oil in the line connected with the sub-port of each changeover valve other than the energized changeover valve passes through the sub-port and the drain port and further passes through the drain connection port and the drain port of the changeover valve on the upper side of the changeover valve connected with this line to reach the lubricating oil reserving part side. Therefore, the line connected with the sub-port of each changeover valve other than the energized changeover valve is constantly depressurized any time other than an ON period of this changeover valve, thereby assuredly performing depressurization.

Moreover, since these changeover valves are sequentially provided to be connected with the pump, downsizing is possible, handling can be facilitated, and a piping operating can be readily performed as compared with the case where the changeover valve is additionally provided, thereby improving an installing operation efficiency.

Additionally, the lubricating oil feeder according to the present invention has a structure where the drain port is connected with the main port in the ON period where the solenoid valve of the changeover valve on the upper side of the lowermost changeover valve is energized, and the drain port is connected with the main port in the ON period where the solenoid valve of the lowermost changeover valve is energized.

At this time, the lubricating oil in the line connected with the main port of the lowermost changeover valve passes through the main port and the input port of the changeover valve on the lower side of the changeover valve which is operated to be energized, further passes through the main port and the drain port of the energized changeover valve, and reaches the lubricating oil reserving part side through the drain connection port and the drain port of the changeover valve on the upper side of the energized changeover valve. As a result, the line connected with this main port is also depressurized. Therefore, a valve requiring depressurization, e.g., the single constant-flow valve can be provided in the line connected with the main port of the lowermost changeover valve.

Further, the lubricating oil feeder according to the present invention has a structure comprising a controller which is settable to one of a stop mode where an operation of the pump and all the solenoid valves are turned off, a sub-port feed mode where one of the solenoid valves is turned on and the operation of the pump is turned on/off to feed the lubricating oil to the line connected with the sub-port of one of the solenoid valves, and a lowermost main port feed mode where all the solenoid valves are turned off and the operation of the pump is turned on/off to feed the lubricating oil to the line connected with the main port of the lowermost changeover valve.

When such a structure is adopted, various lubrication patterns can be realized by changing over modes of a controller, and setting the intermittent time of each line can be facilitated, thereby reducing a waste of the lubricating oil.

Furthermore, in the lubricating oil feeder according to the present invention, the plurality of changeover valves can be attached to/detached from the pump.

When such a structure is adopted, a block having a discharge opening dedicated to a non-depressurized line provided thereto can be disposed in place of the changeover valves, and the pump can be substituted by a pump having a different conformation, thus increasing the versatility.

### Effect of the Invention

According to the lubricating oil feeder of the present invention, the lubricating oil can be individually supplied to each of lines of three or more systems line from one pump, a degree of freedom in how to feed the lubricating oil can be increased to improve the versatility, and the system can be simplified to reduce a cost. Moreover, the lubricating oil can be individually supplied to each line, the degree of freedom in how to feed the lubricating oil can be increased, and the different intermittent times of the respective lines can be set to supply the lubricating oil, thus improving the versatility. Additionally, as compared with the conventional lubricating system, a waste of the lubricating oil to be fed can be reduced.

### Brief Description of the Drawings

FIG. 1 is a schematic view showing a lubricating oil feeder according to an embodiment of the present invention;
FIG. 2 is a front view showing the lubricating oil feeder according to an embodiment of the present invention;
FIG. 3 is a side cross-sectional view showing the lubricating oil feeder according to an embodiment of the present invention;
FIG. 4 is a rear view showing a pump of the lubricating oil feeder according to an embodiment of the present invention;
FIG. 5 is a plan view showing a changeover valve of the lubricating oil feeder according to an embodiment of the present invention;
FIG. 6 is a rear view showing the changeover valve of the lubricating oil feeder according to an embodiment of the present invention;
FIG. 7 is a plan view showing a first changeover valve of the lubricating oil feeder according to an embodiment of the present invention;
FIG. 8 is a front view showing the first changeover valve of the lubricating oil feeder according to an embodiment of the present invention;
FIG. 9 is a rear view showing the first changeover valve of the lubricating oil feeder according to an embodiment of the present invention;
FIG. 10 is a plan view showing a second changeover valve of the lubricating oil feeder according to an embodiment of the present invention;
FIG. 11 is a front view showing the second changeover valve of the lubricating oil feeder according to an embodiment of the present invention;
FIG. 12 is a rear view showing the second changeover valve of the lubricating oil feeder according to an embodiment of the present invention;
FIGS. 13 are views showing vertical cross sections of the first and second changeover valves of the lubricating oil feeder according to an embodiment of the present invention, in which (a) is a view showing a stop mode state and (b) is a view showing a first sub-port feed mode;
FIGS. 14 are views showing the vertical cross sections of the first and second changeover valves of the lubricating oil feeder according to an embodiment of the present invention, in which (a) is a view showing a second sub-port feed mode state and (b) is a view showing a second main port feed mode state;
FIGS. 15 are cross-sectional views of the first changeover valve of the lubricating oil feeder according to an embodiment of the present invention, in which (a) is a cross-sectional view taken along A-A in FIG. 13(a) and (b) is a cross-sectional view taken along A-A in FIG. 13(b);
FIGS. 16 are cross-sectional views of the first changeover valve of the lubricating oil feeder according to an embodiment of the present invention, in which (a) is a cross-sectional view taken along A-A in FIG. 14(a) and (b) is a cross-sectional view taken along A-A in FIG. 14(b);
FIGS. 17 are cross-sectional views of the second changeover valve of the lubricating oil feeder according to an embodiment of the present invention, in which (a) is a cross-sectional view taken along B-B in FIG. 13(a) and (b) is a cross-sectional view taken along B-B in FIG. 13(b);
FIGS. 18 are cross-sectional views of the second changeover valve of the lubricating oil feeder according to an embodiment of the present invention, in which (a) is a cross-sectional view taken along B-B in FIG. 14(a) and (b) is a cross-sectional view taken along B-B in FIG. 14(b);
FIGS. 19 are cross-sectional views of the first changeover valve of the lubricating oil feeder according to an embodiment of the present invention, in which (a) is a cross-sectional view taken along C-C in FIG. 15(a) and (b) is a cross-sectional view taken along C-C in FIG. 15(b);
FIGS. 20 are cross-sectional views of a second changeover valve of the lubricating oil feeder according to an embodiment of the present invention, in which (a) is a cross-sectional view taken along C-C in FIG. 16(a) and (b) is a cross-sectional view taken along C-C in FIG. 16(b);
FIG. 21 is a timing chart showing an example of an operation flow of changeover valves, a pump, single constant-flow valves, and a progressive constant-flow valve of the lubricating oil feeder according to an embodiment of the present invention;
FIG. 22 is a schematic view showing the lubricating oil feeder according to an embodiment of the present invention;

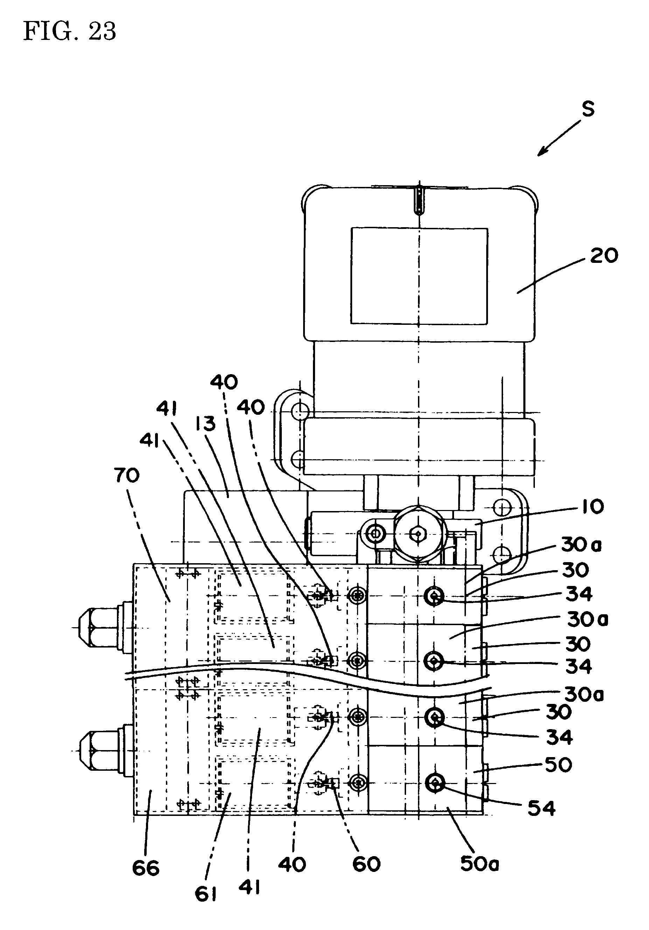

FIG. 23 is a front view showing the lubricating oil feeder according to an embodiment of the present invention;

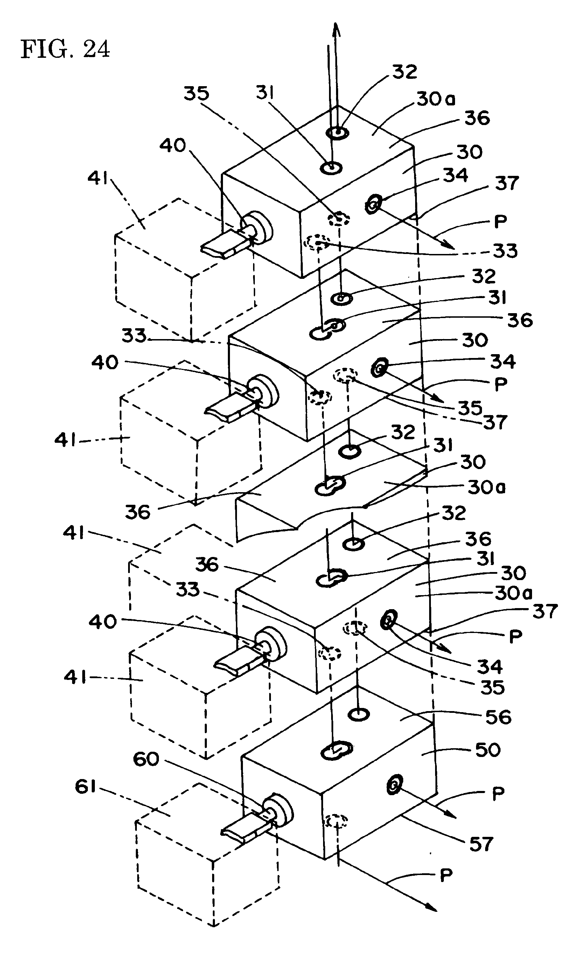

FIG. 24 is a perspective view showing changeover valves of the lubricating oil feeder according to an embodiment of the present invention; and
FIG. 25 is a view showing an example of a conventional lubricating oil feeder.

### Explanations of Letters or Numerals

- S: lubricating oil feeder
- Mr: stop mode
- Ms: sub-port feed mode
- Mm: main port feed mode
- P: line
- P1: first line
- P2: second line
- P3: third line
- Vt: single constant-flow valve
- Vs: progressive constant-flow valve
- 10: pump
- 11: piston
- 12: cylinder
- 13: driving motor
- 14: cam mechanism
- 15: attachment part
- 16: discharge opening
- 17: return opening
- 18: female screw
- 20: lubricating oil reserving part
- 21: cartridge
- 22: cartridge attachment part
- 23: cover
- 30: changeover valve (first changeover valve)
- 30a: solenoid valve (first solenoid valve)
- 31: input port (first input port)
- 32: drain port (first drain port)
- 33: main port (first main port)
- 34: sub-port (first sub-port)
- 35: drain connection port
- 36: attachment target part
- 37: attachment part
- 40: spool
- 41: solenoid (first solenoid)
- 42: spring
- 45: attachment hole
- 46: female screw
- 50: changeover valve (second changeover valve)
- 50a: solenoid valve (second solenoid valve)
- 51: input port (second input port)
- 52: drain port (second drain port)
- 53: main port (second main port)
- 54: sub-port (second sub-port)
- 56: attachment target part
- 60: spool
- 61: solenoid (second solenoid)
- 62: spring
- 65: attachment hole
- 66: cover
- 70: controller

### Best Mode for Carrying out the Invention

A lubricating oil feeder according to an embodiment of the present invention will now be explained hereinafter in detail with reference to the accompanying drawings. This lubricating oil feeder is provided in a lubricating system disposed in an injection molding machine for a resin or a metal, and feeds a grease as a lubricating oil to this lubricating system.

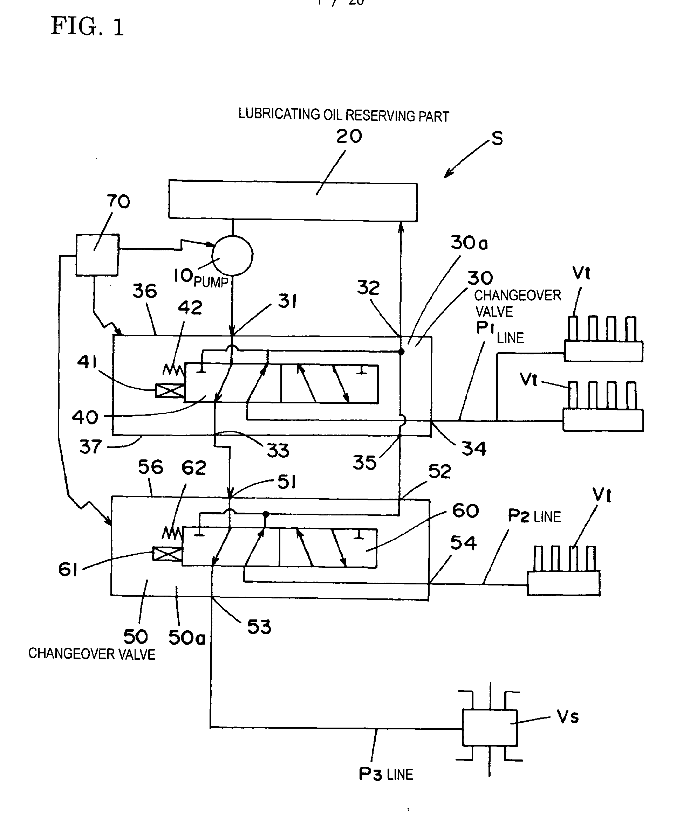

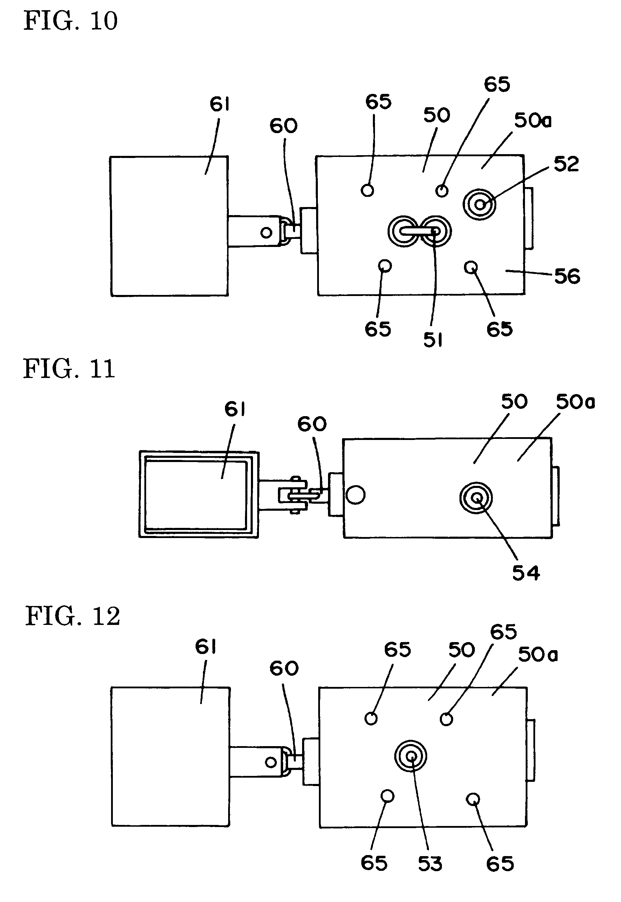

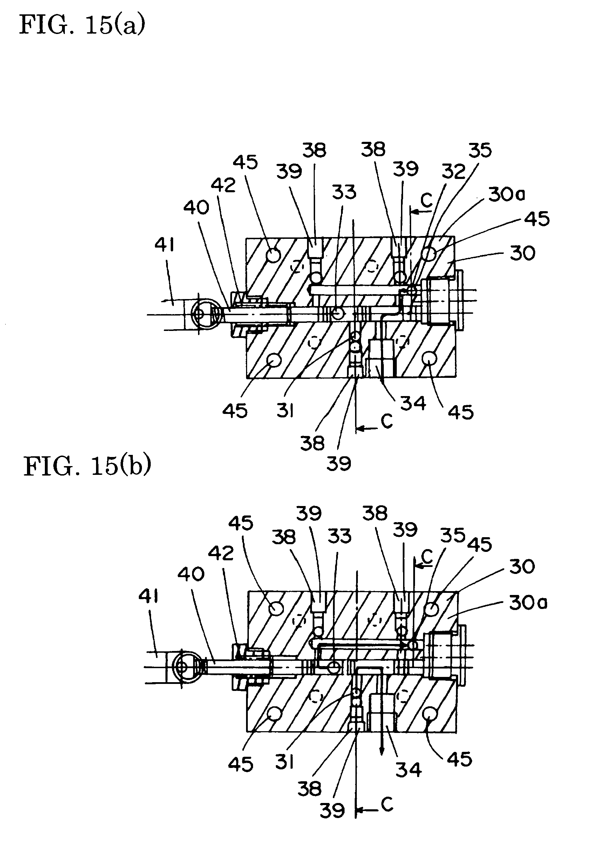

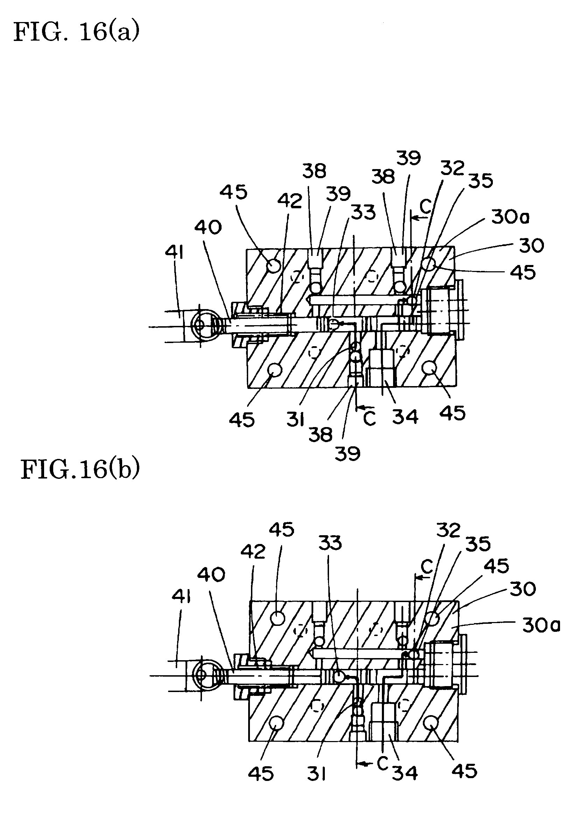

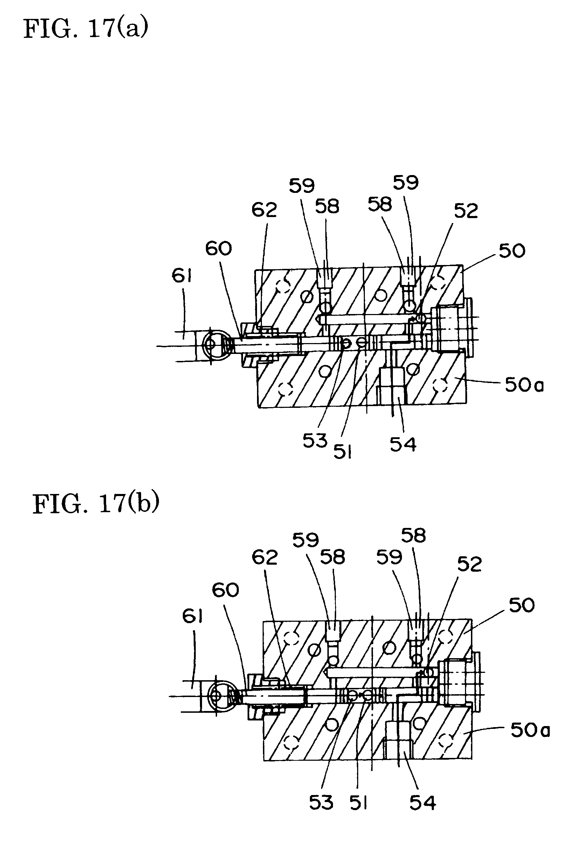

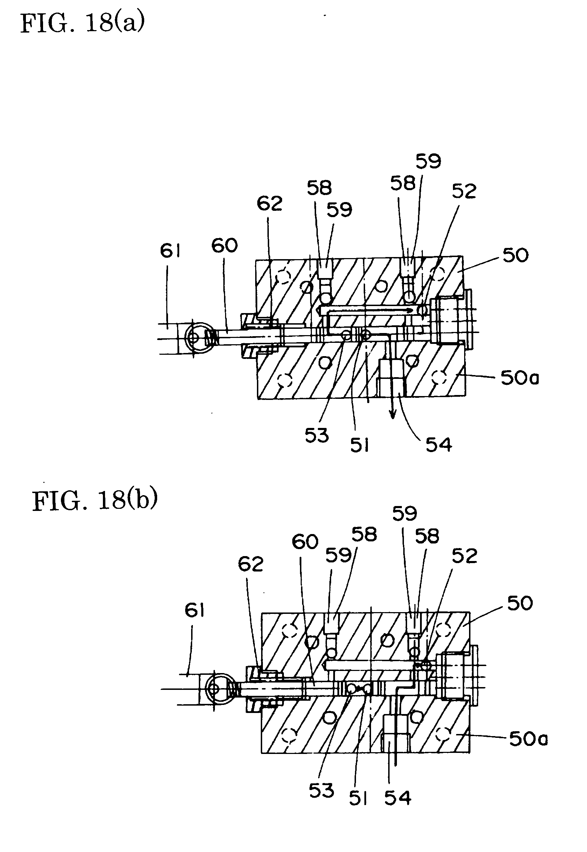

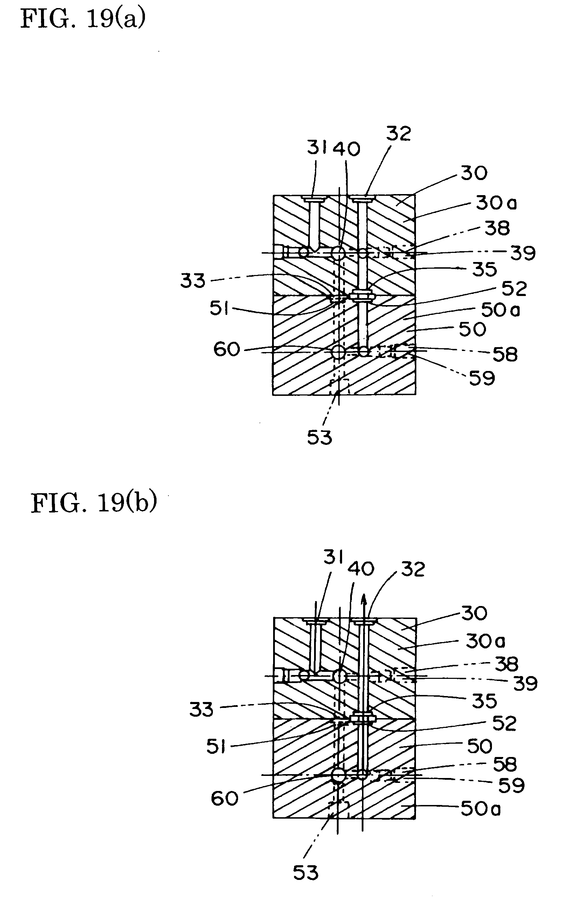

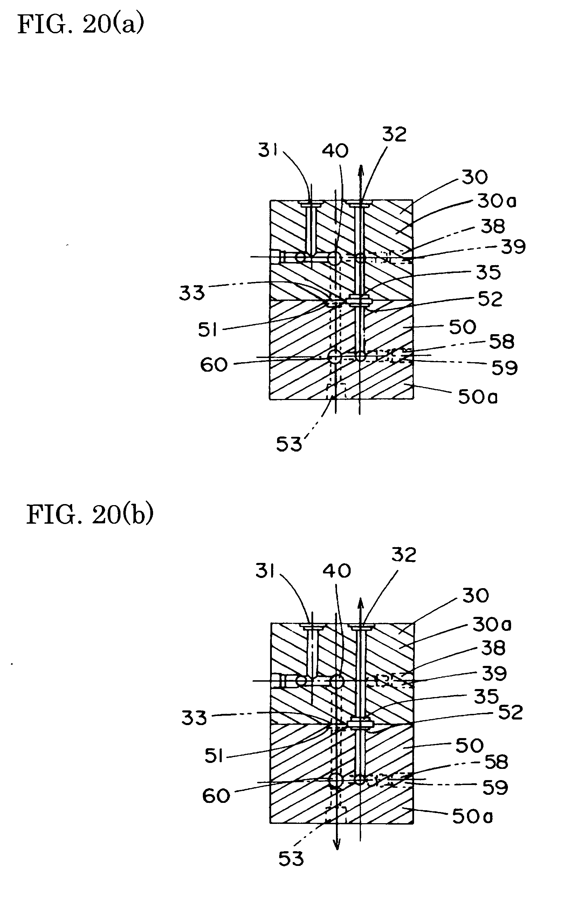

FIGS. 1 to 20 show a lubricating oil feeder S according to an embodiment of the present invention.

The lubricating oil feeder S can cope with lines P1, P2, and P3 of three systems. This lubricating oil feeder S includes one pump 10 which supplies a lubricating oil reserved in a lubricating oil reserving part 20 and a plurality of changeover valves as a basic structure. The plurality of changeover valves are provided to be sequentially connected with the pump 10, and individually supply the lubricating oil to the plurality of lines when changed over. The lubricating oil feeder S depicted in FIGS. 1 to 20 has two continuous changeover valves in order to cope with the three lines. Further, the lubricating coil feeder S feeds a grease from the pump 10 to a lubricating system formed of the first, second, and third lines P1, P2, and P3 of the three different systems via the plurality of changeover valves.

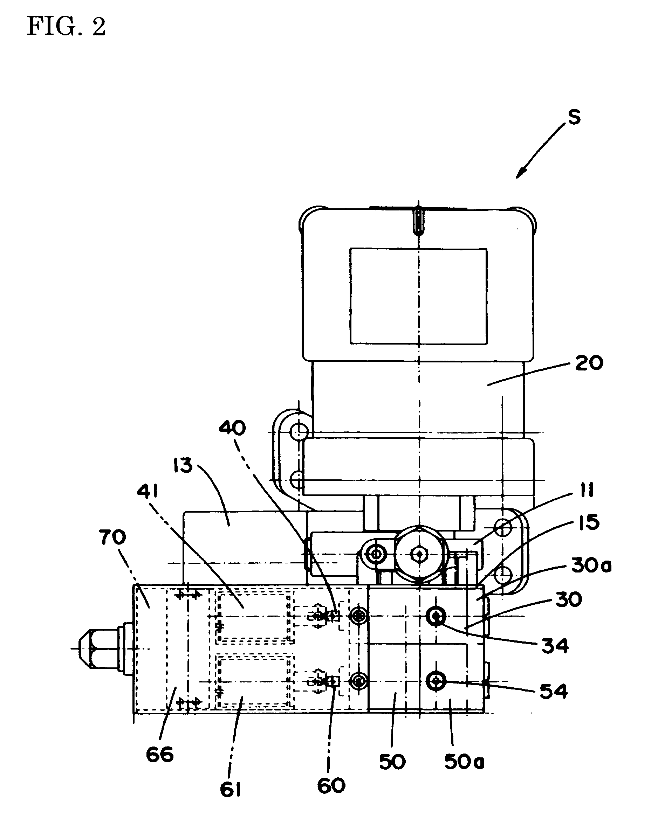

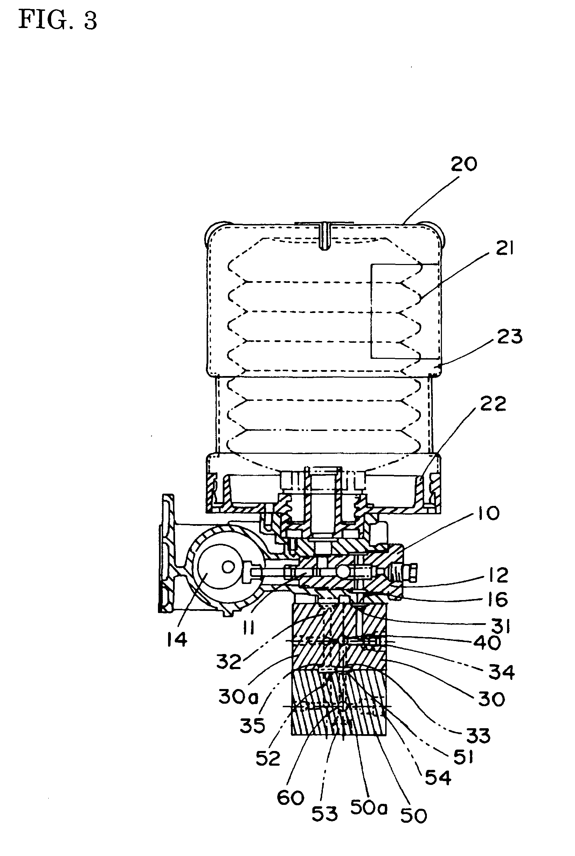

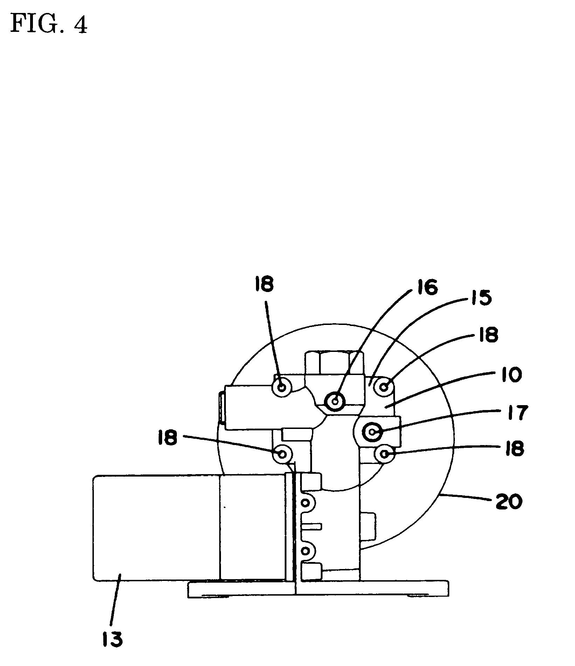

In detail, as shown in FIGS. 2 to 4, the pump 10 is a plunger type pump including a piston 11 and a cylinder 12 and reciprocated by a driving motor 13 via a cam mechanism 14. Furthermore, the lubricating oil reserving part 20 is provided on an upper side of the pump 10, and a changeover valve attachment part 15 is formed on a lower side of the same. As shown in FIG. 4, a discharge opening 16 from which the lubricating oil is discharged is provided to the attachment part 15 on the lower side of the pump 10, a return opening 17 which communicates with the lubricating oil reserving part 20 side to be opened is provided to the same in an exposed manner. As shown in FIG. 3, the lubricating oil reserving part 20 includes a cartridge 21 of the lubricating oil made of a grease, a cartridge attachment part 22 to which the cartridge 21 is attached, and a cover 23 which is disposed to the cartridge attachment part 22 and covers the cartridge 21.

The plurality of changeover valves are constituted of a first changeover valve 30 provided on an upper side of the lowermost changeover valve and a second changeover valve 50 which is the lowermost changeover valve.

The first changeover valve 30 is formed of a first solenoid valve 30a, and has a first input port 31 connected with the discharge opening 16 of the pump 10, a first drain port 32 connected with the return opening 17 and opened to the lubricating oil reserving part 20, a first main port 33 connected with a second input port 51 of the later-explained second changeover valve 50, a first sub-port 34 connected with the first line P1, and a drain connection port 35 connected with a second drain port 52 of the later-explained second changeover valve 50 and communicating with the first drain port 32 of itself.

The first input port 31 and the first drain port 32 are formed at an attachment target part 36 for the pump 10 on the upper side of the changeover valve 30. The first sub-port 34 is formed to face the front side of the first changeover valve 30. The first main port 33 and the drain connection port 35 are formed at an attachment part 37 for the lower changeover valve (the second changeover valve 50) on the lower side of the first changeover valve 30. Reference numeral 38 denotes a void port which is formed in processing and closed by a plug 39.

As shown in FIGS. 1, 7 to 9, 13 to 16, 19, and 20, reference numeral 40 designates a spool; 41, a first solenoid which drives the spool 40; and 42, a spring which returns the spool 40 to a steady position. The spool 40 is pulled due to excitation of the first solenoid 41, connects the first input port 31 with the first sub-port 34, also connects the first drain port 32 with the first main port 33, and disconnects the first drain port 32, the drain connection port 35, and the first main port 33 from the first input port 31 and the first sub-port 34 in an ON state where the first solenoid 41 is energized. Moreover, the spool 40 returns to the steady position by the spring 42, connects the first input port 31 with the first main port 33, also connects the first drain port 32 with the first sub-port 34, and disconnects the first input port 31 from the first sub-port 34 in an OFF state where the first solenoid 41 is de-energized.

The second changeover valve 50 is formed of a second solenoid valve 50a, and has the second input port 51 connected with the first main port 33 of the first changeover valve 30 on the discharge opening 16 side of the pump 10, the second drain port 52 connected with the drain connection port 35 of the first changeover valve 30 and opened to the lubricating oil reserving part 20, a second main port 53 connected with the third line P3, and a second sub-port 54 connected with the second line P2. The second input port 51 can be connected with the pump 10 via the first changeover valve 30, and the second drain port 52 is opened to the lubricating oil reserving part 20 through the drain connection port 35 and the first drain port 32 of the first changeover valve 50.

The second input port 51 and the second drain port 52 are formed at an attachment target part 56 for the first changeover valve 30 on the upper side of the second changeover valve 50. The second sub-port 54 is formed to face the front side of the changeover valve 50. The second main port 53 is formed on the lower side of the second changeover valve 50. Reference numeral 58 denotes a void port which is formed in processing and closed by a plug 59.

As shown in FIGS. 1, 10 to 14, 17, and 18, reference numeral 60 denotes a spool; 61, a second solenoid which drives the spool 60; and 62, a spring which returns the spool 60 to a steady position. The spool 60 is pulled due to excitation of the second solenoid 61, connects the second input port 51 with the second sub-port 54, connects the second drain port 52 with the second main port 53, and disconnects the second drain port 52 and the second main port 53 from the second input port 51 and the second sub-port 54 in an ON state where the second solenoid 61 is energized. Furthermore, the spool 60 returns to the steady position by the spring 62, connects the second input port 51 with the second main port 53, connects the second drain port 52 with the second sub-port 54, and disconnects the second input port 51 from the second sub-port 54 in an OFF state where the same is de-energized.

In the drawing, reference numeral 66 denotes a cover which protects the first solenoid 41 of the first changeover valve 30 and the second solenoid 61 of the second changeover valve 50.

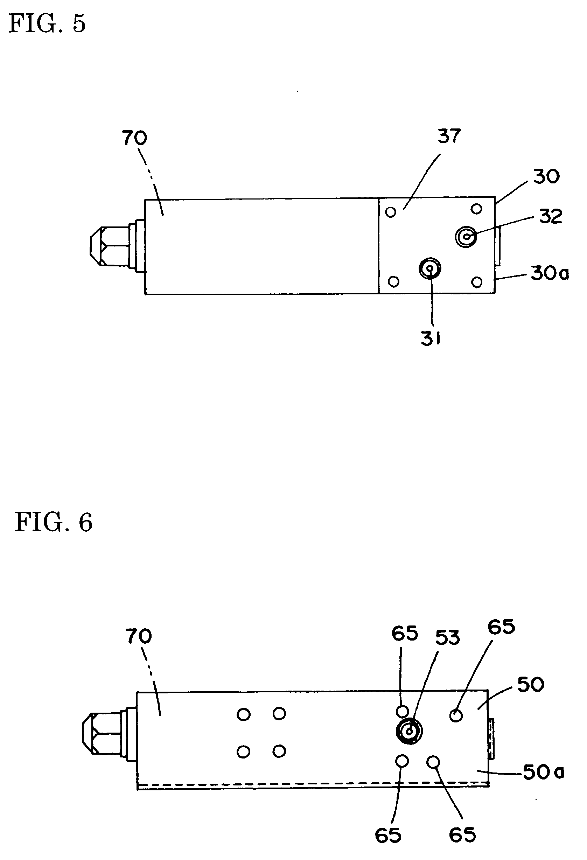

Moreover, the first changeover valve 30 is formed to be attachable to/detachable from the pump 10. In more detail, the attachment part 15 of the pump 10 and the attachment target part 36 of the first changeover valve 30 are formed into shapes allowing these part to be appressed against each other. As shown in FIG. 4, four female screws 18 which are used to dispose the first changeover valve 30 are formed in the pump 10. As shown in FIGS. 5, 7, 9, 15, and 16, four attachment holes 45 into which bolts (not shown) screwed into the female screws 18 of the pump 10 are inserted are provided in the first changeover valve 30. When the bolt heads press the first changeover valve 30 toward the pump 10 side, the first changeover valve 30 is disposed to the pump 10. That is, when the bolts are inserted into the attachment holes 45 and screwed into the female screws 18 in a state where the attachment part 15 of the pump 10 is appressed against the attachment target part 36 of the first changeover valve 30, the first changeover valve 30 is disposed to the pump 10.

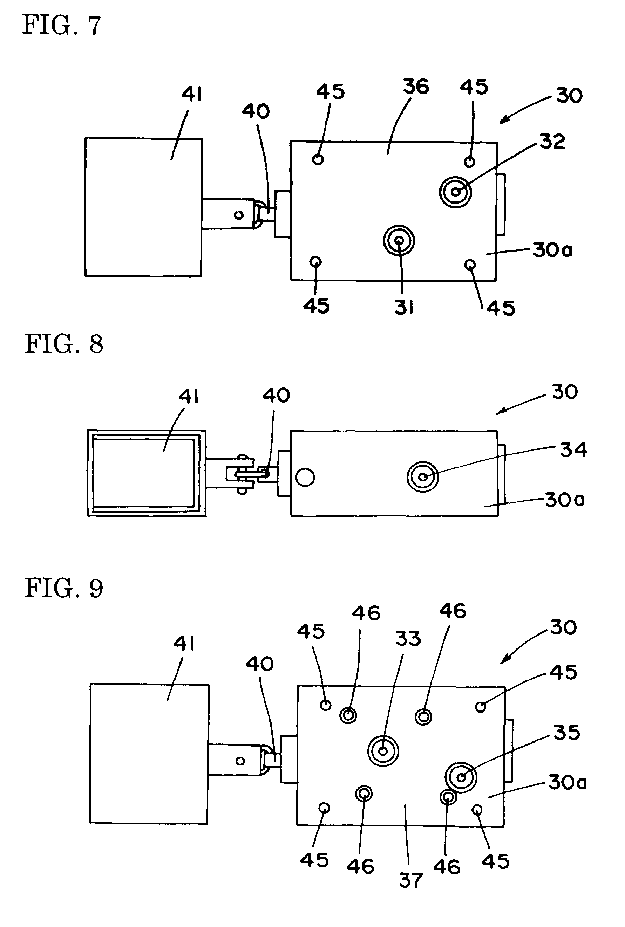

Moreover, the attachment part 37 of the first changeover valve 30 and the attachment target part 56 of the second changeover valve 50 are formed into shapes allowing these parts to be appressed against each other. As shown in FIG. 9, four female screws 46 which are used to dispose the second changeover valve 50 are formed in the first changeover valve 30. As shown in FIGS. 6, 10, 12, 17, and 18, four attachment holes 65 into which bolts (not shown) screwed into the female screws 46 of the first changeover valve 30 are inserted are provided in the second changeover valve 50. When the bolt heads press the second changeover valve 50 toward the pump 10 side, the second changeover valve 50 is disposed to the pump 10. That is, when the bolts are inserted into the attachment holes 65 and screwed into the female screws 46 in a state where the attachment parts 37 of the first changeover valve 30 is appressed against the attachment target part 56 of the second changeover valve 50, the second changeover valve 50 is disposed to the first changeover valve 30.

Moreover, when the bolts are loosened and removed, the first changeover valve 30 is removed from the pump 10 and the second changeover valve 50 is removed from the first changeover valve 30, respectively. Therefore, the changeover valves 30 and 50 can be readily integrated with the pump 10. Additionally, since the changeover valves 30 and 50 are integrally added to the pump 10, downsizing can be effected and handling can be facilitated as compared with the case where the changeover valves 30 and 50 are separately provided. It is to be noted that, although not shown, a block may be attached in place of the first changeover valve 30. A connection opening communicating with the discharge opening 16 of the pump 10 alone is formed in this block, and the block is disposed to the attachment part 15 of the pump 10 through bolts.

Further, this lubricating oil feeder S includes a controller 70 which can be set to any one of a stop mode Mr, a sub-port feed mode Ms, and a lowermost main port feed mode Mm. In the stop mode Mr, an operation of the pump 10 and all the solenoid valves 30a and 50a are turned off. In the sub-port feed mode Ms, one of the solenoid valves 30a and 50a is turned on and the operation of the pump 10 is turned on/off to feed the lubricating oil to the line connected with the sub-port 34 or 54 of one of the solenoid valves 30a and 50a. In the lowermost main port feed mode Mm, all the solenoid valves 30a and 50a are turned off and the operation of the pump 10 is turned on/off to feed the lubricating oil to the line connected to the main port 53 of the lowermost changeover valve 50.

In this embodiment, the controller 70 can be set to one of the stop mode Mr, a first sub-port feed mode M1, a second sub-port feed mode M2, and a second main port feed mode M3. In the stop mode Mr, the operation of the pump 10 and the solenoid valves 30a and 50a are turned off. In the first sub-port feed mode M1 as the sub-port feed mode Ms, the first solenoid valve 30a is turned on, the second solenoid valve 50a is turned off, and the operation of the pump 10 is turned on/off to feed the lubricating oil to the first line P1. In the second sub-port feed mode M2 as the sub-port feed mode Ms, the second solenoid valve 50a is turned on, the first solenoid valve 30a is turned off, and the operation of the pump 10 is turned on/off to feed the lubricating oil to the second line P2. In the second main port feed mode M3, the solenoid valves 30a and 50a are turned off, and the operation of the pump 10 is turned on/off to feed the lubricating oil to the third line P3 connected with the second main port 53 of the second changeover valve 50.

That is, the controller 70 turns on/off the pump 10, turns on/off the first solenoid 41, and turns on/off the second solenoid 61. In the stop mode Mr, the controller 70 turns off the operation of the pump 10, the first solenoid 41, and the second solenoid 61. The controller 70 synchronously turns on the operation of the pump 10, on the first solenoid 41 and off the second solenoid 61 in the first sub-port feed mode M1 (Ms), and synchronously turns on the operation of the pump 10, on the second solenoid 61 and off the first solenoid 41 in the second sub-port feed mode M2 (Ms). In the second main port feed mode M3 (Mm), the controller 70 synchronously turns on the operation of the pump 10 and off the first and second solenoid valves 30a and 50a.

As shown in FIG. 1, the lubricating system in which this lubricating oil feeder S is provided is divided into a region (not shown), e.g., a toggle part where a relatively small oil feed amount suffices and a region (not shown), e.g., an open ball screw without sealing where a relatively large oil feed amount is required. Further, in the lubricating system, the region where the relatively small oil feed amount suffices is divided into a region where a predetermined oil feed amount per unit time is assured by performing a single oil feed operation and a region where a predetermined oil feed amount per unit time is assured by reducing an oil feed amount in a single operation and performing the oil feed operation in several batches.

In each region where the relatively small oil feed amount suffices, a known single constant-flow valve Vt is used to arrange pipes at a plurality of corresponding positions. This single constant-flow valve Vt includes a single piston (not shown) which is reciprocated by pressurization and de-pressurization of the lubricating oil to discharge the lubricating oil and a single discharge opening 16 associated with this piston, and a discharge amount in a single shot is approximately 0.03 ml to 1.5 ml.

On the other hand, in each region where the relatively large oil feed amount is required, a known progressive constant-flow valve Vs is used to arrange pipes at a plurality of corresponding positions. This progressive constant-flow valve Vs includes a plurality of pistons (not shown) which are sequentially reciprocated based on pressurization of the lubricating oil to discharge the lubricating oil and a plurality of pairs of discharge openings 16 associated with the pistons. In the progressive constant-flow valve Vs, a discharge amount per stroke of the piston is set to, e.g., approximately 0.1 ml, and the piston performs a predetermined stroke operation and pauses for a predetermined time to intermittently feed the relatively large fixed amount of the lubricating oil.

The single constant-flow valve Vt provided in the region where the predetermined oil feed amount per unit time is assured by performing the single oil feed operation is provided in the line P1, and the single constant-flow valve Vt provided in the region where the predetermined oil feed amount per unit time is assured by reducing the oil feed amount in the single operation and performing the oil feed operation in several batches is provided in the second line P2. Furthermore, the progressive constant-flow valve Vs provided in the region where the relatively large oil feed amount is required is provided in the third line P3.

Therefore, when using this lubricating oil feeder S, first, the first line P1 is connected with the first sub-port 34, the second line P2 is connected with the second sub-port 54, and the third line P3 is connected with the second main port 53. In this case, a piping operating can be facilitated and an installing operation efficiency can be improved as compared with the case where a different changeover valve is additionally provided.

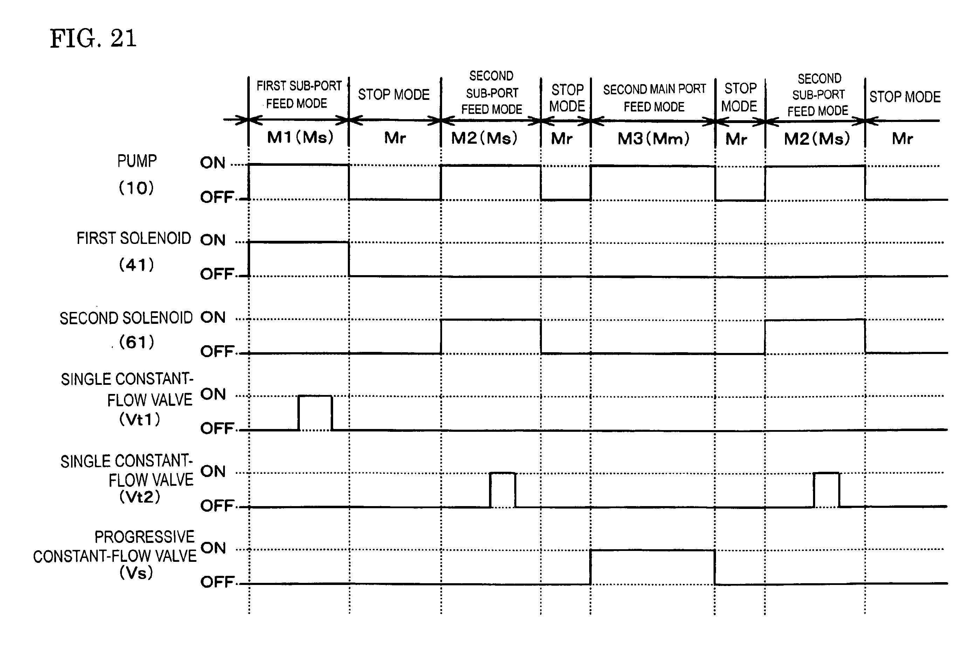

Then, when using the lubricating oil feeder S according to this embodiment to perform lubrication, the following operation is performed. An explanation will now be given as to an example where the lubricating oil feeder S is operated by the controller 70 in one cycle consisting of the first sub-port feed mode M1 (Ms), the stop mode Mr, the second sub-port feed mode M2 (Ms), the stop mode Mr, the second main port feed mode M3 (Mm), the stop mode Mr, the second sub-port feed mode M2 (Ms), and the stop mode Mr as shown in FIG. 21.

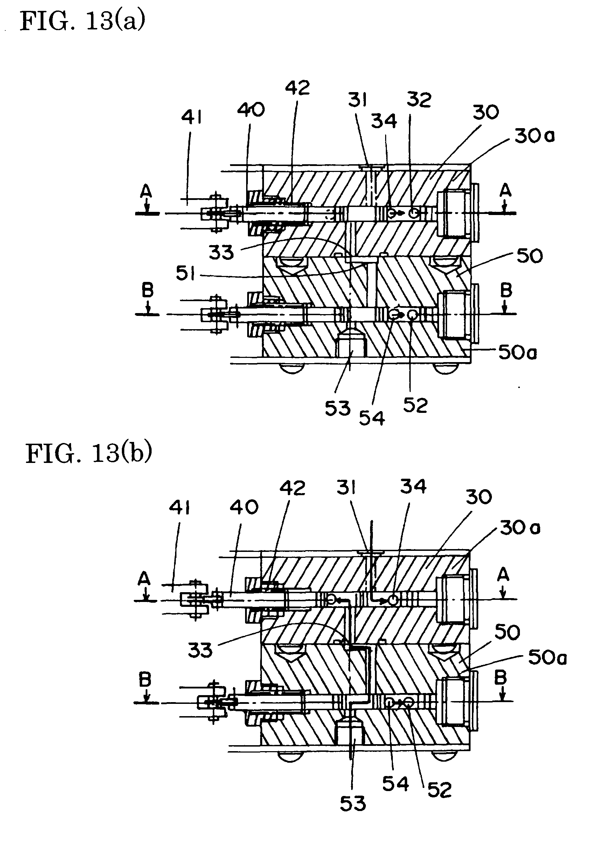

First, when the controller 70 enters the first sub-port feed mode M1 (Ms) from the stop mode Mr, the operation of the pump 10 is turned on, the first solenoid 41 is turned on, and the second solenoid 61 is turned off as shown in FIG. 21. As a result, as shown in FIGS. 13(b), 15(b), 17(b), and 19(b), since the first changeover valve 30 is in the ON state where the first solenoid 41 is energized, the spool 40 is pulled due to excitation of the first solenoid 41. This spool 40 connects the first input port 31 with the first sub-port 34, also connects the first drain port 32 with the first main port 33, and disconnects the first input port 31 and the first sub-port 34 from the first drain port 32 and the first main port 33. Therefore, the lubricating oil from the pump 10 is fed to the first line P1 via the first input port 31 and the first sub-port 34. At this time, the single constant-flow valve Vt provided in the first line P1 performs the single operation, the lubricating oil is discharged, and the lubrication target region is lubricated.

Additionally, as shown in FIG. 21, after a predetermined time, the controller 70 enters the stop mode Mr from the first sub-port feed mode M1 (Ms), the pump 10 is stopped, and the first changeover valve 30 is turned off. Consequently, as shown in FIGS. 13(a), 15(a), 17(a), and 19(a), since the first changeover valve 30 is in the OFF state where the first solenoid 41 is de-energized, the spool 40 returns to a steady position by the spring 42. This spool 40 connects the first input port 31 with the first main port 33, also connects the first drain port 32 with the first sub-port 34, and disconnects the first input port 31 from the first sub-port 34. At this time, since the lubricating oil in the first line P1 reaches the lubricating oil reserving part 20 side via the first sub-port 34 and the first drain port 32, a pressure in the first line P1 is reduced. Since the pressure in the first line P1 is reduced in this manner, the single constant-flow valve Vt in the first line P1 can operate, the single constant-flow valve Vt in the first line P1 performs the single operation and the lubricating oil is discharged to be assuredly fed to each region where the relatively small oil feed amount suffices in the next first sub-port feed mode M1 (Ms).

Then, as shown in FIG. 21, the controller 70 enters the stop mode Mr, the pump 10 is stopped, and the first and second solenoids 41 and 61 are turned off. Furthermore, the lubricating oil is not fed from the lubricating oil feeder S, and the single constant-flow valve Vt and the progressive constant-flow valve Vs do not operate. In this state, when a predetermined time elapses, the controller 70 enters the second sub-port feed mode M2 (Ms) from the stop mode Mr, the lubricating oil feeder S operates, the operation of the pump 10 is turned on, the second solenoid 61 is turned on, and the first solenoid 41 is turned off.

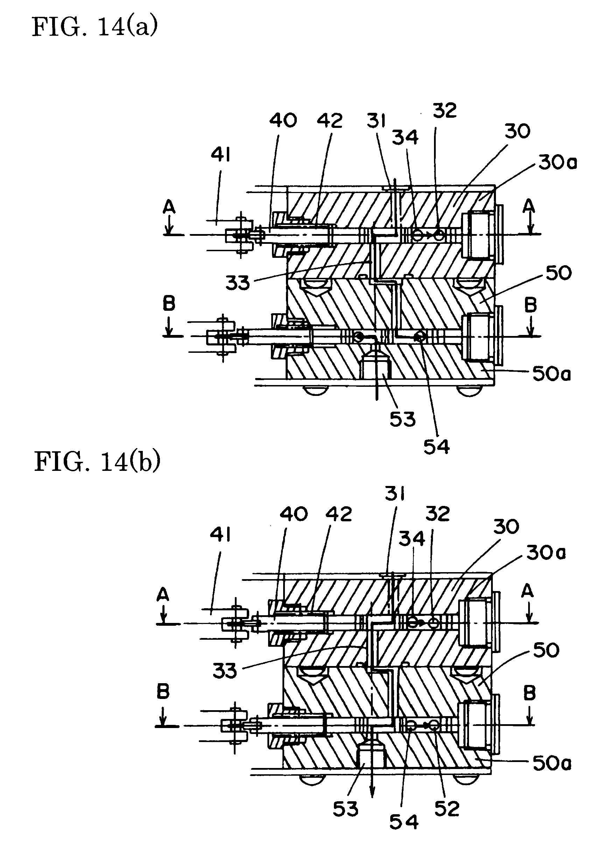

Consequently, as shown in FIGS. 14(a), 16(a), 18(a), and 20(a), since the first changeover valve 30 is in the OFF state where the first solenoid 41 is de-energized, the spool 40 returns to the steady position by the spring 42. This spool 40 connects the first input port 31 with the first main port 33, also connects the first drain port 32 with the first sub-port 34, and disconnects the first input port 31 from the first sub-port 34. Furthermore, since the second changeover valve 50 is in the ON state where the second solenoid 61 is energized, the spool 60 is pulled due to excitation of the second solenoid 61. This spool 60 connects the second input port 51 with the second sub-port 54, also connects the second drain port 52 with the second main port 53, and disconnects the second input port 51 and the second sub-port 54 from the second drain port 52 and the second main port 53. Therefore, the lubricating oil from the pump 10 is fed to the second line P2 via the first input port 31, the first main port 33, the second input port 51, and the second sub-port 54. At this time, the single constant-flow valve Vt provided in the second line P2 performs the single operation and the lubricating oil is discharged so that the lubrication target region is lubricated.

Then, as shown in FIG. 21, after a predetermined time, the controller 70 enters the stop mode Mr from the second sub-port feed mode M2 (Ms), the operation of the pump 10 is turned off, and the second changeover valve 50 is turned off.

Consequently, as shown in FIGS. 13(a), 15(a), 17(a), and 19(a), since the second changeover valve 50 is in the OFF state where the second solenoid 61 is de-energized, the spool 60 returns to the steady position by the spring 62. This spool 60 connects the second input port 51 with the second main port 53, also connects the second drain port 52 with the second sub-port 54, and disconnects the second input port 51 from the second sub-port 54. At this time, since the lubricating oil in the second line P2 reaches the lubricating oil reserving part 20 side via the second sub-port 54, the second drain port 52, the drain connection port 35, and the first drain port 32, a pressure in the second line P2 is reduced. Since the pressure in the second line P2 is reduced in this manner, the single constant-flow valve Vt in the second line P2 can operate, and the single constant-flow valve Vt in the second line P2 performs the single operation and the lubricating oil is discharged to be assuredly fed to each region where the relatively small oil feed amount suffices in the next second sub-port feed mode M2 (Ms).

Moreover, as shown in FIG. 21, since the controller 70 is in the stop mode Mr, the operation of the pump 10 is turned off, the first and second solenoids 41 and 61 are turned off, the lubricating oil is not supplied from the lubricating oil feeder S, and the single constant-flow valves Vt and the progressive constant-flow valve Vs do not operate.

When a predetermined time elapses in this state, the controller 70 sets the second main port feed mode M3 (Mm) from the stop mode Mr to activate the lubricating oil feeder S, and the operation of the pump 10 is turned on whilst the first and second solenoids 41 and 61 are turned off as shown in FIG. 21. Consequently, as shown in FIGS. 14(b), 16(b), 18(b), and 20(b), since the first changeover valve 30 is in the OFF state where the first solenoid 41 is de-energized, the spool 40 returns to the steady position by the spring 42. The spool 40 connects the first input port 31 with the first main port 33, also connects the first drain port 32 with the first sub-port 34, and disconnects the first input port 31 from the first sub-port 34. Additionally, since the second changeover valve 50 is in the OFF state where the second solenoid 61 is de-energized, the spool 60 returns to the steady position by the spring 62. The spool 60 connects the second input port 51 with the second main port 53, also connects the second drain port 52 with the second sub-port 54, and disconnects the second input port 51 from the second sub-port 54. Therefore, the lubricating oil from the pump 10 is fed to the third line P3 via the first input port 31, the first main port 33, the second input port 51, and the second main port 53. Further, the progressive constant-flow valve Vs provided in the third line P3 operates and the lubricating oil is discharged to lubricate the lubrication target region.

Furthermore, as shown in FIG. 21, after a predetermined time, the controller 70 enters the stop mode Mr from the second main port feed mode M3 (Mm), and the operation of the pump 10 and the second changeover valve 50 are turned off. Consequently, as shown in FIGS. 13(a), 15(a), 17(a), and 19(a), since the pump 10 is stopped while keeping the second main port feed mode M3 (Mm), supply of the lubricating oil to the third line P3 is also stopped.

When a predetermined time elapses in this state, the controller 70 sets the second sub-port feed mode M2 (Ms) from the stop mode Mr to activate the lubricating oil feeder S, and the operation of the pump 10 is turned on, the second solenoid 61 is turned on, and the first solenoid 41 is turned off as shown in FIG. 21. Consequently, as shown in FIGS. 14(a), 16(a), 18(a), and 20(a), like the second sub-port feed mode M2 (Ms), the lubricating oil from the pump 10 is fed to the second line P2 via the first input port 31, the first main port 33, the second input port 51, and the second sub-port 54. Moreover, in this case, the lubricating oil in the third line P3 passes through the second main port 53, the second drain port 52, the drain connection port 35, and the first drain port 32 to be opened to the lubricating oil reserving part 20 side, thereby reducing a pressure in the third line P3. Since the pressure in the third line P3 can be reduced, even if the single constant-flow valve Vt is provided in the third line P3 in place of the progressive constant-flow valve Vs, the lubricating oil can be fed from this single constant-flow valve Vt. Thereafter, the controller 70 enters the stop mode Mr, thus reducing a pressure in the second line P2.

Such a cycle is repeated, and the lubricating oil is fed to the region where a predetermined oil feed amount is assured by performing the single oil feed operation from the single constant-flow valve Vt provided in the first line P1. Additionally, the lubricating oil is fed to the region where an oil feed amount in a single oil feed operation is reduced and the oil is fed by performing the oil feed operation in several batches to assure a predetermined oil amount per unit time from the single constant-flow valve Vt provided in the second line P2. Further, the lubricating oil is fed to the region requiring the relatively large oil feed amount from the progressive constant-flow valve Vs provided in the third line P3. As a result, since the first line P1, the second line P2, and the third line P3 are separately provided, a degree of freedom in how to feed the lubricating oil can be increased. That is, the different intermittent times can be set for the first, second, and third lines P1, P2, and P3 to feed the lubricating oil and, even if both the region where a predetermined oil feed amount is assured by a single oil feed operation and the region where a predetermined oil feed amount per unit time is assured by reducing an oil feed amount in the single oil feed operation and performing the oil feed operation in several batches are present, the lubricating oil can be fed in accordance with this structure, thereby improving the versatility. Furthermore, a waste of the lubricating oil to be fed can be reduced as compared with a conventional lubricating system.

Moreover, the lubricating oil can be fed to the three lines by using the single pump 10. Additionally, since the pressures in the first, second, and third lines P1, P2, and P3 can be reduced by just changing over the changeover valves 30 and 50, the different pumps 10 do not have to be provided for the respective lines, and the system can be thereby simplified, thus reducing a cost.

It is to be noted that the pressure in the third line P3 is reduced by turning on the second solenoid 61 of the second changeover valve 50, but the pressure in the third line P3 can be likewise reduced by turning on the first solenoid 41 of the first changeover valve 30. In this case, since the first changeover valve 30 is in the ON state where the first solenoid 41 is energized, the spool 40 is pulled by the first solenoid 41. This spool 40 connects the first input port 31 with the first sub-port 34, also connects the first drain port 32 with the first main port 33, and disconnects the first input port 31 from the first main port 33. Further, since the second changeover valve 50 is in the ON state where the second solenoid 61 is energized, the second input port 51 is connected with the second sub-port 54, the second drain port 52 is connected with the second main port 53, and the second input port 51 and the second sub-port 54 are disconnected from the second drain port 52 and the second main port 53. In this case, the lubricating oil in the third line P3 is opened to the lubricating oil reserving part 20 side via the second main port 53, the second input port 51, the first main port 33, and the first drain port 32, thereby reducing the pressure in the third line P3. That is, when one of the first solenoid 41 of the first changeover valve 30 and the second solenoid 61 of the second changeover valve 50 is turned on, the pressure in the third line P3 is reduced. Therefore, in the OFF state of the pump 10 during the stop mode Mr, the first solenoid 41 or the second solenoid 61 may be turned on to reduce the pressure in the third line P3.

Although the example where the lines of the three systems are provided has been explained above, the lubricating oil feeder S according to the embodiment of the present invention can be likewise used in an example where a lubricating system includes lines of four or more different systems.

An example where the lubricating system includes lines of four systems will be first explained. In this case, in this lubricating oil feeder S, a lubricating system includes lines P of four systems, and each line P is connected with a sub-port 34 of an upper changeover valve 30 which is provided on the upper side of the lowermost changeover valve 50 and has the same structure as the first changeover valve 30.

This changeover valve 30 is previously formed into a shape allowing an upper attachment target part 36 to be disposed and appressed against a lower attachment part 37. Therefore, the plurality of changeover valves 30 can be readily continuously provided on the upper side of the lowermost changeover valve 50.

When adding one changeover valve 30 to the lubricating oil feeder S which supplies a lubricating oil to the lines of the three systems so that the lubricating oil can be individually fed to the lines P of the four systems, the second changeover valve 50 is first removed. Subsequently, an input port 31 and a drain port 32 of the changeover valve 30 to be added are connected with a main port 33 and a drain connection port 35 of the upper changeover valve 30 connected with a pump 10, respectively. Further, a main port 33 and a drain connection port 35 of the changeover valve 30 to be added are connected with an input port 51 and a drain port 52 of the lowermost changeover valve 50, respectively. Furthermore, the lines P are connected with sub-ports 34 and 54 of the changeover valves 30 and 50 and a main port 53 of the changeover valve 50.

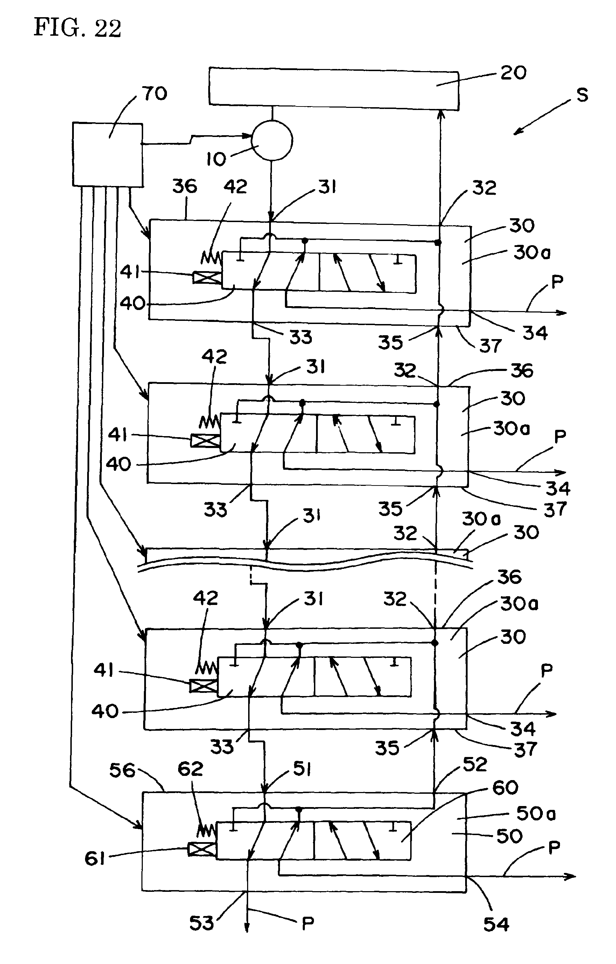

Moreover, as shown in FIG. 22, when individually feeding the lubricating oil from one pump to lines of five or more systems, likewise, a changeover valve 30 on the upper side of the lowermost changeover valve 50 is added in accordance with the number of the lines P, the line P is connected with a sub-port 34 of this added changeover valve 30, and the lubricating oil is fed from the pump 10 to the plurality of pipes P.

Additionally, a controller 70 of this lubricating oil feeder S controls turning on/off a solenoid 41 of the added changeover valve 30 in the sub-port feed mode Ms like the above example so that the lubricating oil can be supplied to each line P connected with the sub-port 34 of this added changeover valve 30.

When using this lubricating oil feeder S, the lines P are first connected with the sub ports 34 and 54 of the respective changeover valves 30 and 50 and the main port 53 of the lowermost changeover valve 50. In this case, a piping operation can be facilitated and an installing operation efficiency can be improved as compared with a case where a different pump is additionally provided.

When using this lubricating oil feeder S to perform lubrication, like the example of the lubricating oil feeder S which feeds the lubricating oil to the lines of the three systems, the lubricating oil feeder S is set to one of the stop mode Mr, the sub-port feed mode Ms, and the lowermost main port feed mode Mm to be activated by the controller 70.

In the stop mode Mr, since each changeover valve 30 on the upper side of the lowermost changeover valve 50 enters an OFF state where a solenoid 41 is de-energized, each spool 40 returns to a steady position by a spring 42. Each spool 40 connects an input port 31 with a main port 33, also connects a drain port 32 with a sub-port 34, and disconnects the input port 31 from the sub-port 34. Further, since the lowermost changeover valve 50 enters the OFF state where a solenoid 61 is de-energized, each spool 60 returns to a steady position by a spring 62, connects an input port 51 with a main port 53, also connects a drain port 52 with a sub-port 54, and disconnects the input port 51 from the sub-port 54. At this time, when the lines P connected with the sub-ports 34 and 54 of the respective changeover valves 30 and 50 are pressurized, like the above example, the lubricating oil passes through the drain ports 32 and 52, also passes through a drain connection port 35 and the drain port 32 of each changeover valve 30 on the upper side in order from the sub-ports 34 and 35 connected with the lines P, and reaches the lubricating oil reserving part 20 side from the drain port 32 of the uppermost changeover valve 30. As a result, the lines P connected with the sub-ports 34 and 54 are depressurized.

Furthermore, in the sub-port feed mode Ms, one of solenoid valves 30a and 50a is turned on, and the operation of the pump 10 is turned on/off to feed the lubricating oil to the line P connected with the sub-port 34 or 54 of one of the solenoid valves 30a and 50a. Since the changeover valve 30 or 50 which has been turned on is in an ON state where the solenoid 41 or 61 is energized, the spool 40 or 60 is pulled due to excitation of the solenoid 41 or 61. The spool 40 or 60 connects the input port 31 or 51 with the sub-port 34 or 54, also connects the drain port 32 or 52 with the main port 33 or 53, and disconnects the input port 31 or 51 and the sub-port 34 or 54 from the drain port 32 or 52 and the main port 33 or 53. Moreover, since each changeover valve 30 or 50 other than the changeover valve 30 or 50 which has been turned on is in an OFF state where the solenoid 41 or 61 is de-energized, the spool 40 or 60 returns to the steady position by the spring 42 or 62. This spool 40 or 60 connects the input port 31 or 51 with the main port 33 or 53, also connects the drain port 32 or 52 with the sub port 34 or 54, and disconnects the input port 31 or 51 from the sub port 34 or 54.

At this time, when the uppermost changeover valve 30 is turned on and when the lowermost changeover valve 50 is turned on, substantially the same operation as that in the example of the three systems is carried out. Additionally, at this time, when any changeover valve 30 other than the uppermost changeover valve 30 and the lowermost changeover valve 50 is turned on, the lubricating oil from the pump 10 passes through the input port 31 and the main port 33 to be fed to the lower changeover valve 30 in case of the changeover valve 30 on the upper side of the changeover valve 30 which has been turned on. Further, in the changeover valve 30 which has been turned on, the lubricating oil from the upper main port 33 passes through the input port 31 and the sub-port 34 to be fed to the line P connected with this sub-port 34. Furthermore, at this time, when the line P connected with the main port 53 of the lowermost changeover valve 50 is pressurized, the lubricating oil in this line P passes through the main port 33 or 53 and the input port 31 or 51 in the changeover valve 30 or 50 on the lower side of the changeover valve 30 which has been turned on, and then passes through the main port 33 and the drain port 32 of the changeover valve 30 which has been turned on. Moreover, in the changeover valve 30 on the upper side of the changeover valve 30 which has been turned on, the lubricating oil in the line P passes through the drain connection port 35 and the drain port 32 to reach the lubricating oil reserving part 20 side, and hence the line P connected with this main port 53 is depressurized. Therefore, the single constant-flow valve Vt requiring depressurization can be provided in the line P connected with the main port 53 of the lowermost changeover valve 50 in place of the progressive constant-flow valve Vs.

Then, after elapse of a predetermined time, the controller 70 enters the stop mode Mr from the sub-port feed mode Ms, and the operation of the pump 10 and the changeover valves 30 and 50 are turned off. As a result, since the changeover valves 30 and 50 are in the OFF state where the solenoid 41 and 61 are de-energized, the stop mode Mr state is provided, and the lines P connected with the sub-ports 34 and 54 are depressurized. Therefore, since the single constant-flow valves Vt of the lines P are operable, the single constant-flow valves Vt in the lines P perform the single operation and the lubricating oil is discharged to be assuredly fed to each region where the relatively small oil feed amount suffices in the next lubricating oil feed operation.

Then, when the controller 70 sets the lowermost main port feed mode Mm to activate the lubricating oil feeder S, all the solenoids 41 and 61 are turned off, and the operation of the pump 10 is turned on. As a result, since each changeover valve 30 on the upper side of the lowermost changeover valve 50 is in the OFF state where the solenoid 41 is de-energized, the spool 40 returns to the steady position by the spring 42. The spool 40 connects the input port 31 with the main port 33, also connects the drain port 32 with the sub-port 34, and disconnects the input port 31 from the sub-port 34. Furthermore, since the lowermost changeover valve 50 is also in the OFF state where the solenoid 61 is de-energized, the spool 60 returns to the steady position by the spring 62. The spool 60 connects the input port 51 with the main port 53, also connects the drain port 52 with the sub-port 54, and disconnects the input port 51 from the sub-port 54. Therefore, the lubricating oil from the pump 10 passes through the input port 31 and the main port 33 of each upper changeover valve 30, and also passes through the input port 51 and the main port 53 of the lowermost changeover valve to be fed to the line P connected with this main port 53.

Therefore, according to this lubricating oil feeder S, adding the changeover valve 30 on the upper side of the lowermost changeover valve 50 enables further finely setting different intermittent times in accordance with the respective lines P, and not only a waste of the lubricating oil can be reduced, but also the lubricating oil can be fed to the lines P of three or more systems by using the single pump 10. That is, when the different intermittent times are set in accordance with the respective lines P, a degree of freedom in how to feed the lubricating oil can be increased, thus improving the versatility.

Moreover, in the structure of this lubricating oil feeder S, the progressive constant-flow valve Vs requiring the relatively large amount may be provided in the line P connected with the main port 53 of the lowermost changeover valve 50. With this configuration, when feeding the lubricating oil to this line P, the lubricating oil in a space between the input port 31 and the main port 33 in the changeover valve 30 on the upper side of the lowermost changeover valve 50 can be frequently fed to the line P from the main port 53 of the lower changeover valve 50. In this case, the lubricating oil in the space between the input port 31 and the main port 33 in the changeover valve 30 on the upper side of the lowermost changeover valve 50 is the fresh lubricating oil from the lubricating oil reserving part 20, and an effect of suppressing solidification of the lubricating oil can be expected.

It is to be noted that, in the lubricating oil feeder S according this embodiment, the sub-port 34 or 54 is connected with the drain port 32 or 52 in each changeover valve 30 or 50 other than the changeover valve 30 or 50 which has been turned on irrespective of a mode to which the controller 70 is set. As a result, the lubricating oil in the line P connected with the sub-port 34 or 54 of this changeover valve 30 or 50 is constantly opened to the lubricating oil reserving part 20 side in any period other than the ON period of the solenoid valve 30a or 50a, thus assuredly effecting depressurization.

## Claims

1. A lubricating oil feeder which includes one pump feeding a lubricating oil reserved in a lubricating oil reserving part and feeds the lubricating oil to a plurality of lines of different systems from the pump, comprising:
a plurality of changeover valves which are sequentially continuously provided and connected with the pump and changed over to individually feed the lubricating oil to the respective lines,
wherein a changeover valve on the upper side of the lowermost changeover valve in the plurality of changeover valves is formed of a solenoid valve, the solenoid valve having: an input port connected with a discharge opening side of the pump; a drain port opened to the lubricating oil reserving part side; a main port connected with the input port of a lower changeover valve on the side of one of the plurality of lines; a sub-port connected with one of the other lines; and a drain connection port which is connected with the drain port of the lower changeover valve and communicates with its own drain port, the input port being connected with the sub port whilst the drain port, the drain connection port, and the main port being disconnected from the input port and the sub port in an ON period where the solenoid valve is energized, the input port being connected with the main port, the drain port being connected with the sub-port, and the input port being disconnected from the sub-port in an OFF period where the solenoid valve is de-energized, and
the lowermost changeover valve is formed of a solenoid valve, the solenoid valve having: an input port connected with the discharge opening side of the pump; a drain port opened to the lubricating oil reserving part side; a main port connected with one of the plurality of lines; and a sub-port connected with one of the other lines, the input port being connected with the sub-port whilst the drain port and the main port being disconnected from the input port and the sub-port in the ON period where the solenoid valve is energized, the input port being connected with the main port, the drain port being connected with the sub-port, and the input port being disconnected from the sub-port in the OFF period where the solenoid valve is de-energized.

2. The lubricating oil feeder according to claim 1, wherein the drain port is connected with the main port in the ON period where the solenoid valve of the changeover valve on the upper side of the lowermost changeover valve is energized, and the drain port is connected with the main port in the ON period where the solenoid valve of the lowermost changeover valve is energized.

3. The lubricating oil feeder according to claim 1 or 2, comprising a controller which is settable to one of a stop mode where an operation of the pump and all the solenoid valves are turned off, a sub-port feed mode where one of the solenoid valves is turned on and the operation of the pump is turned on/off to feed the lubricating oil to the line connected with the sub-port of one of the solenoid valves, and a lowermost main port feed mode where all the solenoid valves are turned off and the operation of the pump is turned on/off to feed the lubricating oil to the line connected with the main port of the lowermost changeover valve.

4. The lubricating oil feeder according to claim 1, 2, or 3, wherein the plurality of changeover valves are attachable to/detachable from the pump.
